# FASCICULE DE BREVET EUROPEEN

(11) **EP 2 471 715 B1**
(45) Date de publication et mention de la délivrance du brevet: **17.10.2018**
(21) Numéro de dépôt: 12150038.3
(22) Date de dépôt: 03.01.2012
(51) Int. Cl.: B64G 1/40, F02K 9/50

(54) **Augmentation d'un système de propulsion monoergol**
Steigerung eines Monergol-Antriebssystems
Augmentation of a monopropellant propulsion system

(30) Priorité: 03.01.2011 FR 1150003
(43) Date de publication de la demande: 04.07.2012
(73) Titulaire: Centre National d'Etudes Spatiales, 75001 Paris (FR)
(72) Inventeur: Boudier, Guillaume, 31500 TOULOUSE (FR)
(74) Mandataire: Gaillarde, Frédéric F. Ch.

(56) Documents cités:
- EP-A1- 0 570 721
- WO-A1-96/26108
- WO-A2-03/047969
- US-A- 3 534 765
- US-A- 3 981 418

## Description

### DOMAINE TECHNIQUE GENERAL

L'invention concerne un système de propulsion d'un véhicule spatial comprenant un réservoir d'ergol à membrane.

### ETAT DE LA TECHNIQUE

Un système de propulsion d'un véhicule spatial permet au véhicule spatial, au cours d'une mission, de changer d'orbite, de se maintenir sur une orbite souhaitée et de contrôler son attitude.

Un tel système de propulsion comprend principalement un réservoir d'ergol et des propulseurs.

Le réservoir est pressurisé au lancement du véhicule spatial.

Les systèmes de propulsion actuels comprennent un réservoir comprenant une membrane étanche délimitant un volume supérieur et un volume inférieur. Les documents US 3981418A, WO 03/047969A2, EP 0 570 721A décrivent de tels systèmes de propulsion.

Dans ce type de système de propulsion, un gaz pressurisant sous pression est stocké dans le volume supérieur et l'ergol est stocké dans le volume inférieur.

Le gaz pressurisant permet l'alimentation en ergol des propulseurs.

Au cours de la mission le gaz va se détendre de 24 bars à 50°C jusqu'à 5,5 bars à 10°C, pression minimale admise pour alimenter les propulseurs.

Ainsi, en début de mission, le réservoir est rempli d'un volume V_{c,0} d'ergol et d'un volume V_{g,0} de gaz pressurisant. La quantité de gaz est déterminée pour qu'au cours de la mission il y ait l'égalité suivante : V_{g,0}/V_{g,f} = (P_{f}/P₀)*T₀/T_{f} où V_{g,f} est le volume de gaz en fin de mission lorsque le réservoir ne contient plus d'ergol, P₀ est la pression dans le réservoir lorsque il est rempli à sa capacité maximale à la température T₀ et P_{f} est la pression dans le réservoir à la température T_{f} lorsque le réservoir est vide.

Un problème est que le volume V_{c,0} maximal d'ergol est limité du fait qu'il faut que le réservoir contienne du gaz pour respecter les contraintes ci-dessus. Ainsi, la durée d'une mission est impactée par la capacité du réservoir qui est telle que V_{c,0} = V_{g,f} - V_{g,0}.

### PRESENTATION DE L'INVENTION

Un objectif de l'invention est d'obtenir un système de propulsion dans lequel le réservoir d'ergol est capable de contenir un volume d'ergol supérieur au volume habituel pour un réservoir donné.

Pour atteindre cet objectif, l'invention concerne, selon un premier aspect, un système de propulsion d'un véhicule spatial, comprenant :
- un réservoir principal adapté pour contenir un volume d'ergol et un gaz pressurisant qui applique une pression sur l'ergol, le réservoir principal comprenant une membrane délimitant un volume supérieur pour contenir le gaz pressurisant et un volume inférieur pour contenir l'ergol, le gaz appliquant la pression à l'ergol par l'intermédiaire de ladite membrane ;
- un circuit de pressurisation en liaison directe avec le réservoir principal ;
   le système de propulsion étant caractérisé en ce qu'il comprend en outre
- un réservoir auxiliaire adapté pour contenir également du gaz pressurisant, le réservoir auxiliaire étant en liaison directe avec le réservoir principal par l'intermédiaire du circuit de pressurisation afin qu'en fonctionnement le gaz contenu dans le réservoir auxiliaire se détende continument avec le gaz contenu dans le volume supérieur du réservoir principal, les pressions régnant dans le volume supérieur du réservoir principal, dans le circuit de pressurisation et dans le réservoir auxiliaire étant identiques, le réservoir auxiliaire étant dimensionné pour que le volume d'ergol maximal du réservoir principal soit supérieur au volume d'ergol que peut contenir le réservoir principal lorsque le système de propulsion ne comprend pas de réservoir auxiliaire.

D'autres aspects du système de propulsion selon le premier aspect de l'invention sont les suivants :
- le volume d'ergol contenu dans le système de propulsion est supérieur à 75% du volume du réservoir principal ;
- le réservoir auxiliaire a une capacité de deux litres ;
- l'ergol est de l'hydrazine, le gaz est un gaz inerte et la pression de fonctionnement est supérieure à 5,5 bars à 10°C ;
- le réservoir principal, le réservoir auxiliaire et le circuit de pressurisation sont dimensionnés pour que la pression maximale dans le réservoir principal soit de 24 bars à 50°C lorsque le réservoir contient le volume maximal d'ergol ;
- il comprend une vanne de remplissage/vidange du gaz disposée à l'extrémité du circuit de pressurisation ;

Et, l'invention concerne également un véhicule spatial comprenant un système de propulsion selon le premier aspect de l'invention.

### PRESENTATION DE LA FIGURE

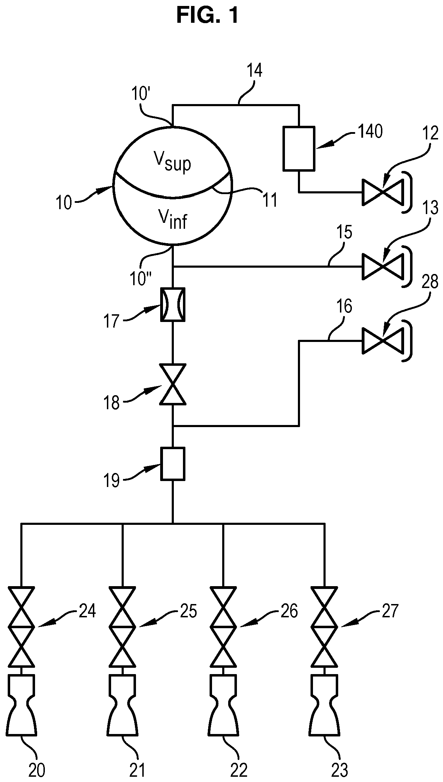

D'autres caractéristiques et avantages de l'invention ressortiront encore de la description qui suit laquelle est purement illustrative et non limitative et doit être lue en regard de la figure 1 qui illustre schématiquement un système de propulsion conforme à l'invention.

### DESCRIPTION DETAILLEE DE L'INVENTION

Le système de propulsion conforme à l'invention comprend un réservoir principal 10 d'ergol contenant un ergol et un gaz pressurisant ainsi qu'un réservoir auxiliaire 140 contenant également du gaz pressurisant.

Le système de propulsion comprend également un circuit de pressurisation 14 en liaison directe avec le réservoir principal 10. On comprend par « en liaison directe » le fait d'être directement connecté sans aucun intermédiaire (par exemple une vanne).

Le réservoir principal 10 est défini par un volume supérieur Vₛᵤₚ et un volume inférieur V_{inf}. Le gaz pressurisant est contenu dans le volume Vₛᵤₚ, tandis que l'ergol est contenu dans le volume inférieur V_{inf}.

Le réservoir principal 10 est de préférence sphérique. D'autres formes peuvent être envisagées en fonction du porteur, par exemple un satellite.

L'ergol est de préférence de l'hydrazine N₂H₄ liquide utilisée comme monoergol dans le système de propulsion.

Le gaz est de préférence un gaz inerte tel que de l'azote N₂.

Le réservoir principal 10 est relié à au moins un propulseur au moyen d'un circuit d'alimentation. Quatre propulseurs 20, 21, 22, 23 sont représentés sur la figure.

Le gaz permet d'appliquer une pression P sur l'ergol pour alimenter les propulseurs et améliorer leurs performances.

De manière avantageuse, le réservoir principal 10 comprend une membrane 11 pour définir le volume supérieur d'une part et pour définir le volume inférieur d'autre part.

La membrane peut être constituée d'un polymère qui peut se déformer.

La membrane 11 est étanche et isole le gaz pressurisant de l'ergol. En outre, la membrane 11 permet de transmettre, sans perte, la pression générée par le gaz pressurisant sur l'ergol.

Le réservoir auxiliaire 140 est en liaison directe avec le réservoir principal 10 par l'intermédiaire du circuit de pressurisation 14 afin qu'en fonctionnement le gaz contenu dans le réservoir auxiliaire 140 se détende continument avec le gaz contenu dans le volume supérieur du réservoir principal 10, les pressions régnant dans le volume supérieur du réservoir principal, dans le circuit de pressurisation et dans le réservoir auxiliaire étant identiques.

Le circuit de pressurisation 14, est par conséquent en liaison directe avec une entrée 10' du réservoir 10. En outre, le circuit de pressurisation 14 est fermé à son extrémité par une vanne 12 de remplissage/vidage.

Le réservoir auxiliaire 140 est disposé entre l'entrée 10' du réservoir 10 et son extrémité fermée par une vanne 12.

Le circuit de pressurisation 14 se présente, par exemple, sous la forme d'un tuyau cylindrique de diamètre typiquement égal à 1/4 de pouce.

En fonctionnement, le gaz issu du réservoir auxiliaire 140 et par l'intermédiaire du circuit de pressurisation 14 pousse l'ergol jusqu'à une sortie 10" du réservoir au moyen de la membrane 11.

L'entrée 10' et la sortie 10" du réservoir sont de préférence opposées et alignées le long d'un axe de symétrie (non représenté) du réservoir 10.

Les entrée 10' et sortie 10" sont circulaires et sont telles que les connexions avec le circuit de pressurisation 14 et le circuit d'alimentation des propulseurs sont étanches.

Le circuit d'alimentation est constitué d'un réseau de tuyauteries le long duquel sont disposés une restriction 17, une vanne d'isolation pyrotechnique 18 et un filtre 19. La ligne 15 permet le remplissage du réservoir en ergol, et la ligne 16 est une ligne de test pour les essais d'intégration comprenant à son extrémité une vanne 28.

En outre, des vannes 24, 25, 26, 27 sont disposées respectivement en amont des propulseurs 20, 21, 22, 23 pour contrôler le débit d'ergol vers chaque propulseur.

Le système de propulsion est tel que le gaz pressurisant est en majorité contenu dans le réservoir auxiliaire 140 et le circuit 14 de pressurisation pour permettre de stocker dans le réservoir principal, un volume d'ergol supérieur au volume d'ergol maximal que peut contenir le réservoir principal 10 lorsque le système de propulsion ne comprend pas de réservoir auxiliaire 140.

Par exemple, dans certains cas, le réservoir principal 10 peut contenir un volume d'ergol occupant 75% de son volume lorsque le système de propulsion ne comprend pas de réservoir auxiliaire 140 alors que dans le cas où le système de propulsion comprend un tel réservoir auxiliaire 140, le réservoir principal 10 peut contenir un volume d'ergol occupant plus de 75% de son volume.

En effet, dans les systèmes de l'art antérieur, le volume de gaz stocké dans le circuit de pressurisation est négligeable car le gaz est majoritairement contenu dans le volume supérieur du réservoir 10.

Avec la configuration du système de propulsion décrit, le volume de gaz, habituellement stocké dans le volume supérieur du réservoir, est déporté vers le circuit de pressurisation par l'intermédiaire du réservoir auxiliaire 140. De cette façon il est possible, pour un réservoir principal donné, d'augmenter la capacité de stockage de l'ergol dans le système de propulsion.

Le réservoir auxiliaire 140 est par exemple sphérique mais d'autres formes peuvent être envisagées en fonction de l'espace disponible dans le porteur.

En outre, le réservoir auxiliaire 140 peut être dimensionné pour contenir 2L de gaz pressurisant lorsque le réservoir principal est rempli au maximum d'ergol.

Avec un gaz tel que de l'azote N₂ et un ergol tel que de l'hydrazine, un réservoir principal 10 ayant un volume V=5,8 L peut contenir au maximum un volume d'ergol de 5,79 L ayant une pression P_{c,0}=24 bars et une température de 50°C (soit une masse de 5,68 kg). Pour un tel volume d'ergol il faut V_{g,0}=2,02 L de gaz pressurisant stocké à une pression P_{g,0}=24 bars et une température de 50°C dans le réservoir auxiliaire.

Les systèmes de propulsion de l'art antérieur ne peuvent contenir au maximum que 4,29 L d'hydrazine à une pression de 24 bars et une température de 50°C.

Le système de propulsion ci-dessus décrit est avantageusement destiné à des véhicules spatiaux tels que des satellites de télécommunication ou de mesure.

## Revendications

1. Système de propulsion d'un véhicule spatial, comprenant :
- un réservoir principal (10) adapté pour contenir un volume d'ergol et un gaz pressurisant qui applique une pression sur l'ergol, le réservoir principal (10) comprenant une membrane (11) délimitant un volume supérieur pour contenir le gaz pressurisant et un volume inférieur pour contenir l'ergol, le gaz appliquant la pression à l'ergol par l'intermédiaire de ladite membrane (11) ;
- un circuit (14) de pressurisation en liaison directe avec le réservoir principal (10) ;
le système de propulsion étant **caractérisé en ce qu'**il comprend en outre
- un réservoir auxiliaire (140) adapté pour contenir également du gaz pressurisant, le réservoir auxiliaire (140) étant en liaison directe avec le volume supérieur du réservoir principal (10) par l'intermédiaire du circuit (14) de pressurisation afin qu'en fonctionnement le gaz contenu dans le réservoir auxiliaire (140) se détende continument avec le gaz contenu dans le volume supérieur du réservoir principal (10), les pressions régnant dans le volume supérieur du réservoir principal, dans le circuit de pressurisation et dans le réservoir auxiliaire étant identiques, pour que le volume d'ergol maximal (V_{c,0}) du réservoir principal soit supérieur au volume d'ergol que peut contenir le réservoir principal lorsque le système de propulsion ne comprend pas de réservoir auxiliaire (140).

2. Système de propulsion selon la revendication 1 dans lequel le volume d'ergol maximal contenu dans le système de propulsion est supérieur à 75% du volume du réservoir principal (10).

3. Système de propulsion selon l'une des revendications précédentes dans lequel le réservoir auxiliaire a une capacité de deux litres.

4. Système de propulsion selon l'une des revendications précédentes dans lequel l'ergol est de l'hydrazine, le gaz est un gaz inerte et la pression de fonctionnement est supérieure à 5,5 bars à 10°C.

5. Système de propulsion selon l'une des revendications précédentes dans lequel le réservoir principal, le réservoir auxiliaire et le circuit de pressurisation sont dimensionnés pour que la pression maximale dans le réservoir principal soit de 24 bars à 50°C lorsque le réservoir contient le volume maximal d'ergol.

6. Système de propulsion selon l'une des revendications précédentes comprenant une vanne de remplissage/vidange du gaz disposée à l'extrémité du circuit de pressurisation (14).

7. Véhicule spatial comprenant un système de propulsion selon l'une des revendications précédentes.

## Patentansprüche

1. Antriebssystem eines Raumfahrzeugs, umfassend:
- ein Hauptreservoir (10), das geeignet ist, ein Ergolvolumen und ein Druckgas zu enthalten, das einen Druck auf das Ergol ausübt, wobei das Hauptreservoir (10) eine Membran (11) umfasst, die ein oberes Volumen, um das Druckgas zu enthalten, und ein unteres Volumen, um das Ergol zu enthalten, begrenzt, wobei das Gas den Druck auf das Ergol mittels der Membran (11) ausübt;
- einen Druckkreis (14) in direkter Verbindung mit dem Hauptreservoir (10);
wobei das Antriebssystem **dadurch gekennzeichnet ist, dass** es ferner umfasst
- ein Hilfsreservoir (140), das geeignet ist, ebenfalls Druckgas zu enthalten, wobei das Hilfsreservoir (140) mittels des Druckkreises (14) in direkter Verbindung mit dem oberen Volumen des Hauptreservoirs (10) ist, damit im Betrieb das in dem Hilfsreservoir (140) enthaltene Gas sich kontinuierlich mit dem im oberen Volumen des Hauptreservoirs (10) enthaltenen Gas ausdehnt, wobei die Drücke, die im oberen Volumen des Hauptreservoirs, im Druckkreis und im Hilfsreservoir herrschen, identisch sind, damit das maximale Ergolvolumen (V_{c,0}) des Hauptreservoirs größer als das Ergolvolumen ist, das das Hauptreservoir enthalten kann, wenn das Antriebssystem kein Hilfsreservoir (140) umfasst.

2. Antriebssystem nach Anspruch 1, wobei das maximal im Antriebssystem enthaltene Ergolvolumen 75 % größer als das Volumen des Hauptreservoirs (10) ist.

3. Antriebssystem nach einem der vorangehenden Ansprüche, wobei das Hilfsreservoir eine Kapazität von zwei Litern hat.

4. Antriebssystem nach einem der vorangehenden Ansprüche, wobei das Ergol Hydrazin ist, das Gas ein inertes Gas ist und der Betriebsdruck höher als 5,5 bar bei 10 °C ist.

5. Antriebssystem nach einem der vorangehenden Ansprüche, wobei das Hauptreservoir, das Hilfsreservoir und der Druckkreis bemessen sind, damit der maximale Druck im Hauptreservoir 24 bar bei 50 °C beträgt, wenn das Reservoir das maximale Ergolvolumen enthält.

6. Antriebssystem nach einem der vorangehenden Ansprüche, umfassend ein Füll-/Ablassventil des Gases, das am Ende des Druckkreises (14) angeordnet ist.

7. Raumfahrzeug, umfassend ein Antriebssystem nach einem der vorangehenden Ansprüche.

## Claims

1. A propulsion system for a spacecraft, comprising:
- a main tank (10) adapted to contain a volume of propellant and a pressurising gas which applies pressure to the propellant, the main tank (10) comprising a membrane (11) delimiting an upper volume to contain the pressurising gas and an inferior volume to contain the propellant, the gas applying the pressure to the propellant by means of said membrane (11);
- a pressurisation circuit (14) connected directly to the main tank (10);
the propulsion system being **characterised in that** it further comprises
- an auxiliary tank (140) adapted to also contain pressurising gas, the auxiliary tank (140) being connected directly to the upper volume of the main tank (10) by means of the pressurisation circuit (14) so that in operation, the gas contained in the auxiliary tank (140) expands continuously with the gas contained in the upper volume of the main tank (10), the pressures prevailing in the upper volume of the main tank, in the pressurisation circuit and in the auxiliary tank being identical, so that the maximal volume of propellant (V_{c,0}) of the main tank is greater than the volume of propellant which the main tank can contain when the propulsion system comprises no auxiliary tank (140).

2. The propulsion system according to claim 1, wherein the maximal volume of propellant contained in the propulsion system is greater than 75% of the volume of the main tank (10).

3. The propulsion system according to one of the preceding claims, wherein the auxiliary tank has a capacity of two litres.

4. The propulsion system according to one of the preceding claims, wherein the propellant is hydrazine, the gas is an inert gas and the operating pressure is greater than 5.5 bars at 10°C.

5. The propulsion system according to one of the preceding claims, wherein the main tank, the auxiliary tank and the pressurisation circuit are dimensioned so that the maximal pressure in the main tank is 24 bars at 50°C when the tank contains the maximal volume of propellant.

6. The propulsion system according to one of the preceding claims, comprising a filling/emptying valve of the gas arranged at the end of the pressurisation circuit (14) .

7. A spacecraft comprising a propulsion system according to one of the preceding claims.
